# EUROPEAN PATENT APPLICATION

(11) **EP 4 746 539 A1**
(43) Date of publication of application: **20.05.2026**
(21) Application number: 25209783.7
(22) Date of filing: 20.10.2025
(51) Int. Cl.: H04W 52/02, H04W 84/12

(54) **LOW-POWER WIRELESS NETWORK SYSTEM**

(30) Priority: 28.10.2024 US 202418928486
(71) Applicant: STMicroelectronics International N.V., 1228 Plan-les-Ouates, Geneva (CH)
(72) Inventor: LO IACONO, Daniele, 24122 BERGAMO (IT); TOMASONI, Alessandro, 24039 SOTTO IL MONTE GIOVANNI XXIII (IT); OSNATO, Fabio, 20124 MILANO (IT)
(74) Representative: Cabinet Beaumont

(57) **Abstract**

A low-power wireless network system, a wireless network node, a wireless network hub, and a method for transmitting a data frame on a low-power wireless network system are provided. An example wireless network system includes an access point and a plurality of wireless nodes including a destination wireless node and a wireless hub. The access point is configured to transmit data frames to the plurality of wireless nodes according to a wireless network protocol. The destination wireless node, includes a primary connection radio configured to generate communication signals according to the wireless network protocol and a wakeup radio receiver configured to receive a low-power wakeup signal. The wireless hub is configured to transmit the low-power wakeup signal to the destination wireless node in an instance in which a beacon frame from the access point indicates a buffered data frame is intended for the destination wireless node.

## Description

### TECHNOLOGICAL FIELD

Embodiments of the present disclosure relate generally to a low-power wireless network system, and more particularly, to a low power wireless network system configured to use low-power wakeup signals.

### BACKGROUND

Many non-standard compute devices, such as sensors, appliances, lights, doorbells, entertainment or surveillance systems, wearable and so on, are configured to wirelessly communicate and interact over the internet. To be connected to the internet, these wireless network nodes often integrate Wi-Fi technology. As such, wireless network nodes configured for Wi-Fi communication are widespread. Many wireless network nodes are configured for operation in remote and/or inaccessible locations without access to a power source. Wireless network nodes without access to a power source rely on battery, solar, or other power sources to operate. Excessive power consumption may require regular battery charging and/or cause malfunction in the operation of the wireless network node.

Applicant has identified many technical challenges and difficulties associated with power consumption on wireless network nodes. Through applied effort, ingenuity, and innovation, Applicant has solved problems related to power consumption on wireless network nodes by developing solutions embodied in the present disclosure, which are described in detail below.

### BRIEF SUMMARY

Various embodiments are directed to a low-power wireless network system, a low-power wireless network node, a low-power wireless network hub, and a method for transmitting a data frame on a low-power wireless network system. An example wireless network system is provided. The example wireless network system comprises an access point and a plurality of wireless network nodes including a destination wireless network node and a wireless network hub. The access point is configured to establish communication with an external network, and transmit data frames to the plurality of wireless network nodes according to a wireless network protocol. The destination wireless network node, comprises a primary connection radio configured to generate communication signals according to the wireless network protocol and a wakeup radio receiver configured to receive a low-power wakeup signal. The wireless network hub is configured to transmit the low-power wakeup signal to the destination wireless network node in an instance in which a beacon frame from the access point indicates a buffered data frame is intended for the destination wireless network node.

In some embodiments, the destination wireless network node further comprises a controller, wherein the controller is configured to: recognize the low-power wakeup signal; and wakeup the primary connection radio.

In some embodiments, the controller is further configured to transmit a frame request by the primary connection radio to the access point upon receipt of the low-power wakeup signal.

In some embodiments, the controller is further configured to transmit, by the primary connection radio, an acknowledgement signal to the wireless network hub, wherein the acknowledgement signal acknowledges receipt of the low-power wakeup signal.

In some embodiments, the controller is further configured to transmit, by the primary connection radio, a request complete command to a requesting device from which the buffered data frame originated.

In some embodiments, the wireless network node remains in a deep-sleep state until the low-power wakeup signal is received.

In some embodiments, the low-power wakeup signal is a wakeup on-off keying signal.

In some embodiments, the wireless network protocol is a Wi-Fi protocol.

In some embodiments, the wireless network hub is configured to transmit the wakeup on-off keying signal at a PHY layer in accordance with an 802.11ba Wi-Fi protocol.

In some embodiments, the wireless network hub is associated with a second wireless network hub, wherein the wireless network hub enters a deep-sleep state until a second low-power wakeup signal is received from the second wireless network hub.

In some embodiments, at least one of the wireless network nodes of the plurality of wireless network nodes is configured to dynamically assume a role as the wireless network hub.

An example wireless network node is further provided. The example wireless network node comprises a primary connection radio and a wakeup radio receiver. The primary connection radio is configured to generate communication signals according to a wireless network protocol. The wakeup radio receiver is configured to receive a low-power wakeup signal from a wireless network hub in an instance in which a beacon frame from an access point, configured to establish communication with an external network and transmit data frames to a plurality of wireless network nodes according to the wireless network protocol, indicates a buffered data frame is intended for the wireless network node.

In some embodiments, the wireless network node further comprises a controller configured to recognize the low-power wakeup signal and wakeup the primary connection radio.

In some embodiments, the controller is further configured to transmit a frame request by the primary connection radio to the access point upon receipt of the low-power wakeup signal.

In some embodiments, the controller is further configured to transmit, by the primary connection radio, an acknowledgement signal to the wireless network hub, wherein the acknowledgement signal acknowledges receipt of the low-power wakeup signal.

In some embodiments, the controller is further configured to transmit, by the primary connection radio, a request complete command to a requesting device from which the buffered data frame originated.

In some embodiments, the wireless network node remains in a deep-sleep state until the low-power wakeup signal is received.

In some embodiments, the low-power wakeup signal is a wakeup on-off keying signal.

In some embodiments, the wireless network protocol is a Wi-Fi protocol.

In some embodiments, the wireless network hub is configured to transmit the wakeup on-off keying signal in accordance with an 802.11ba Wi-Fi protocol.

An example wireless network hub associated with one or more wireless network nodes, is further provided. The example wireless network hub comprises a primary connection radio configured to: receive beacon frames from an access point according to a wireless network protocol indicating a destination wireless network node within the one or more wireless network nodes, wherein the access point is configured to establish communication with an external network. The primary connection radio further configured to transmit a low-power wake-up signal to the destination wireless network node in an instance in which the beacon frame from the access point indicates a buffered data frame is intended for the destination wireless network node.

In some embodiments, the wireless network hub, further comprises a wakeup radio receiver configured to receive a second low-power wakeup signal from a second wireless network hub, in an instance in which a beacon frame from the access point, indicates a second buffered data frame is intended for the wireless network hub, and the wireless network hub is in a deep-sleep state.

An example method for transmitting a buffered data frame to a destination wireless network node is further provided. The example method comprising: receiving, from an access point, at a wireless network hub, a beacon frame in accordance with a wireless network protocol indicating the buffered data frame is intended for the destination wireless network node; and transmitting a low-power wakeup signal to the destination wireless network node. The destination wireless network node comprising a primary connection radio and a wakeup radio receiver. The primary connection radio configured to generate communication signals according to the wireless network protocol. The wakeup radio receiver configured to receive the low-power wakeup signal and wakeup the primary connection radio upon receiving the low-power wakeup signal.

In some embodiments, the example method further comprises receiving an acknowledgement signal from the primary connection radio of the destination wireless network node, wherein the acknowledgement signal acknowledges receipt of the low-power wakeup signal, and wherein the wireless network hub remains in an active state until the acknowledgement signal is received.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates a block diagram of an example low-power wireless network system in accordance with an example embodiment of the present disclosure.
FIG. 2 illustrates a block diagram of an example low-power wireless network hub in accordance with an example embodiment of the present disclosure.
FIG. 3 illustrates a block diagram of an example low-power wireless network node in accordance with an example embodiment of the present disclosure.
FIG. 4 illustrates an example data frame transmission sequence in an example low-power wireless network system in accordance with an example embodiment of the present disclosure.
FIG. 5 depicts a flow diagram illustrating an example method for transmitting a buffered data frame on a low-power wireless network system in accordance with an example embodiment of the present disclosure.
FIG. 6 depicts a flow diagram illustrating an example method for receiving a buffered data frame on a low-power wireless network system in accordance with an example embodiment of the present disclosure.
FIG. 7 illustrates an example signal diagram for transmitting a buffered data frame on a low-power wireless network system in accordance with an example embodiment of the present disclosure.
FIG. 8 illustrates an example block diagram of an example controller in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with power consumption of wireless devices in a wireless network system. As understood by those of skill in the field to which the present disclosure pertains, there are numerous advantages to operating various devices within a wireless network system.

For example, an increasing number of non-standard compute devices (e.g., internet of things (IoT) devices), such as sensors, appliances, lights, doorbells, entertainment systems, and so on, are configured to wirelessly communicate and interact over the internet. To be connected to the internet, these wireless network devices often integrate a wireless technology, such as Wi-Fi technology. Many wireless network devices are configured for operation in remote and/or inaccessible locations without access to a power source. Wireless network devices without access to a power source rely on battery, solar, or other power sources to operate. Excessive power consumption may require regular battery charging and/or cause malfunction in the operation of the wireless network devices. Some wireless network devices may be difficult to access and/or inconvenient to maintenance. Minimizing power consumption may greatly benefit such wireless network devices.

Support for wireless communication on a wireless network device may require significant power consumption. Even in an instance in which a wireless network device is idle-connected 99% of the time, significant power (e.g., 2 milliwatts) may be required to wake-up, listen to an access point, and check for pending data frames.

In some examples, the period between wake-up checks may be extended on wireless network devices. However, extending the period between wake-up checks adds additional latency to the responsiveness of the wireless network device. Many wireless network devices may perform inadequately with decreased responsiveness. In other examples, alternative low-power (proprietary or standard) wireless communication protocols may be utilized. In such embodiments, dedicated bridge devices may be required to communicate with an external network.

To alleviate power consumption on wireless network devices integrating Wi-Fi technology, the IEEE has ratified amendment IEEE 802.11ba, which introduces a wake-up radio protocol on a Wi-Fi network. The wake-up radio protocol may significantly reduce power consumption on a wireless network device (e.g., 100 microwatts). To be effective, the IEEE 802.11ba standard must be integrated into the wireless network devices, including the wireless network nodes and the access point or router. The implementation of the IEEE 802.11ba standard is not adopted in current Wi-Fi access points and may not be widely used for a number of years. In the mean-time, wireless network devices may greatly benefit from low-power techniques similar to the wake-up radio protocol of IEEE 802.11ba.

The various example embodiments described herein utilize various techniques to reduce power consumption of wireless network devices on a wireless network system. For example, in some embodiments of the present disclosure, a low-power wireless network comprises one or more low-power wireless network hubs configured to receive beacon frames transmitted by an access point and determine if a destination of a pending data frame corresponds to a low-power wireless network node registered to the low-power wireless network hub. In an instance in which the destination of the pending data frame is a low-power wireless network node registered to the low-power wireless network hub, the low-power wireless network hub may transmit a low-power wakeup signal to the low-power wireless network node. Thus, the low-power wireless network node may remain in a deep-sleep state until a pending data frame intended for the low-power wireless network node is advertised by the access point.

For example, the low-power wireless network node includes a primary connection radio and a wakeup radio. The primary connection radio is utilized to transmit communication signals in accordance with the wireless protocol of the wireless network system. The primary connection radio is generally high-performing and consumes significant power to support transmission and reception of the communication signals in accordance with the wireless protocol. To preserve power, the primary connection radio and other features of the low-power wireless network node may remain in a deep-sleep state until a low-power wakeup signal is received. The wakeup radio is a low-power radio configured to receive the low-power wakeup signal transmitted by the low-power wireless network hub. Upon detection of the low-power wakeup signal, the low-power wireless network node may enable the primary connection radio of the low-power wireless network node.

In some embodiments, a low-power wakeup signal may comprise a wakeup on-off keying signal. A low-power wireless network hub may be configured to transmit the wakeup on-off signal, for example, by pulsing a power amplifier on and off.

Once the low-power wireless network node is fully active, communication between the low-power wireless network node and the access point or other network device may continue normally. As a result of the herein described example embodiments and in some examples, the power consumption of a low-power wireless network node may be greatly reduced without compromising the responsiveness of the low-power wireless network node. In addition, there is no need for additional hardware to manage a bridge between a low-power wireless network protocol and an external network.

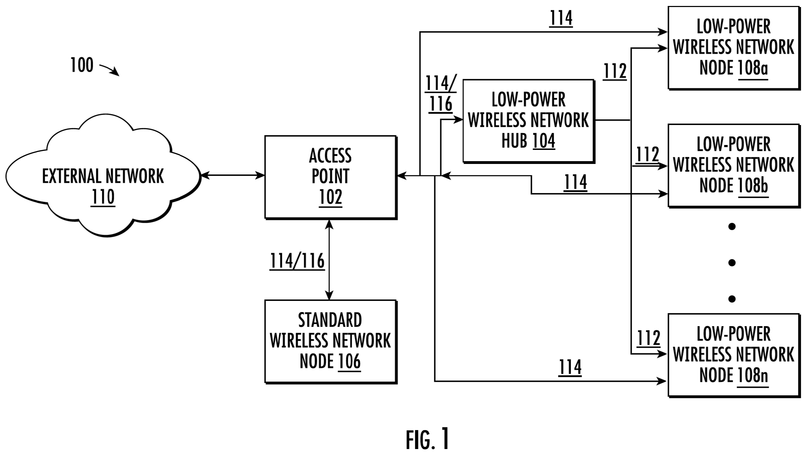

Referring now to FIG. 1, an example low-power wireless network system 100 is provided. As depicted in FIG. 1, the example low-power wireless network system 100 includes an access point 102 in electrical communication with an external network 110 and a plurality of wireless network nodes. The wireless network nodes include a standard wireless network node 106, a low-power wireless network hub 104, and a plurality of low-power wireless network nodes 108a - 108n. As depicted in FIG. 1, the access point 102 is configured to transmit and receive primary communication frames 114 in accordance with a wireless network protocol. In addition, the access point 102 is configured to transmit beacon frames 116 which may be used to indicate destinations of pending primary communication frames 114. As further depicted in FIG. 1, the low-power wireless network hub 104 is configured to transmit low-power wakeup signals 112 to the low-power wireless network nodes 108a-108n associated with the low-power wireless network hub 104.

As depicted in FIG. 1, the example low-power wireless network system 100 includes an access point 102. An access point 102 is any device including hardware and/or software configured to connect to an external network 110 in accordance with a specific wired or wireless protocol, for example, through digital subscriber line (DSL), fiber optic connection, coaxial, Wi-Fi, or other similar connections. In some embodiments, the access point 102 may be configured to transmit and receive radio waves in accordance with the Wi-Fi wireless communication protocol, for example, in accordance with the IEEE 802.11 standard. In some embodiments, the access point 102 may also act as a gateway or router.

The access point 102 is the reference point for all communication within a local area network. The access point 102 is configured to receive and transmit primary communication frames 114 (e.g., data frames) between the various devices of the low-power wireless network system 100 and with the external network 110. In some embodiments, the access point 102 may buffer primary communication frames 114, including primary communication frames 114 destined for wireless network nodes associated with the access point 102. The access point 102 may include a map of all wireless network nodes associated with the access point 102 for which at least a primary communication frame 114 is currently buffered. For example, in a Wi-Fi wireless communication protocol, the access point 102 may manage a traffic indication map (TIM). The access point 102 is further configured to generate beacon frames 116.

Beacon frames 116 or beacon signals notify all connected wireless network nodes (e.g., standard wireless network node 106, low-power wireless network hub 104, low-power wireless network node 108a - 108n) of the intended destination of one or more buffered primary communication frames 114. Beacon frames 116 are transmitted by the access point 102 at regular intervals. In traditional Wi-Fi operation, each of the standard wireless network nodes 106 wakes up to receive the beacon frame 116. The beacon frame 116 may further include a map indicating wireless network nodes with pending primary communication frames 114. For example, in a Wi-Fi wireless network protocol, the beacon frame 116 may include the TIM element. The TIM element lists the nodes having buffered primary communication frames 114 intended for them. In an instance in which a buffered primary communication frame 114 is intended for a particular wireless network node, the wireless network node may request to the access point 102 the delivery of the primary communication frame 114 and receive the primary communication frame 114.

As further depicted in FIG. 1, the access point 102 is configured to transmit and receive primary communication frames 114. Primary communication frames 114 comprise any standard communication signals transmitted between the various devices comprising the low-power wireless network system 100 in accordance with the wireless network protocol. A wireless network protocol may define various characteristics of the primary communication frames 114, for example, carrier frequency, modulation type, data structure, security parameters, and so on. In some examples, primary communication frames 114 may comprise packets, datagrams, frames, or other similar transfer units associated with the wireless network protocol. The transfer units, or frames, of the primary communication frames 114 may comprise management frames (e.g., beacon frames 116), control frames, data frames, and so on. Each device in the low-power wireless network system 100 is configured to transmit and/or receive primary communication frames 114.

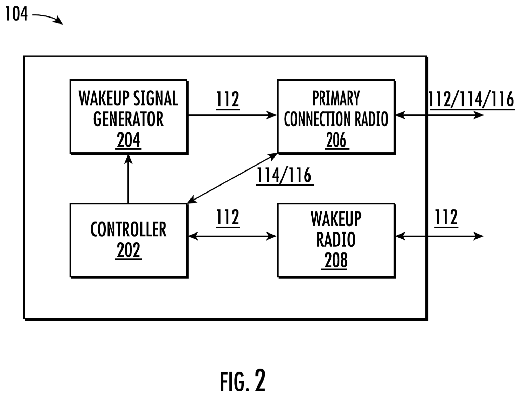

As further depicted in FIG. 1, the example low-power wireless network system 100 includes a low-power wireless network hub 104. A low-power wireless network hub 104 comprises any device configured to receive beacon frames 116 transmitted according to a wireless network protocol, determine the destination of pending primary communication frames 114, and transmit a low-power wakeup signal 112 in an instance in which the destination corresponds to a low-power wireless network node 108a - 108n registered to the low-power wireless network hub 104. The identification of one or more low-power wireless network hubs 104 in a low-power wireless network system 100 may be pre-determined or performed on an ad-hoc basis at start-up or dynamically during operation Upon identification as a low-power wireless network hub 104 a low-power wireless network hub 104 may determine and/or receive the list of associated low-power wireless network nodes 108a - 108n. The associated low-power wireless network nodes 108a - 108n are stored in a storage device accessible by the low-power wireless network hub 104 at runtime. A low-power wireless network hub 104 is further described in relation to FIG. 2.

As further depicted in FIG. 1, the low-power wireless network system 100 includes one or more low-power wireless network nodes 108a - 108n. A low-power wireless network node 108a - 108n comprises any wireless network device configured with a low-power wakeup radio receiver and a primary connection radio, wherein the low-power wireless network node 108a - 108n is configured to recognize low-power wakeup signals 112 transmitted by the low-power wireless network hub 104 to the low-power wakeup radio during a deep-sleep state. During a deep-sleep state, various functionality of the low-power wireless network node 108a - 108n may be disabled, including but not limited to the primary connection radio. In addition, during the deep-sleep state, the low-power wireless network node 108a - 108n may not wakeup to detect beacon frames 116 transmitted by the access point 102.

As described herein, the low-power wakeup signal 112 may be transmitted by the low-power wireless network hub 104 in an instance in which a beacon frame 116, indicating a pending primary communication frame 114 buffered by the access point 102, is received by the low-power wireless network hub 104. Upon detection of the low-power wakeup signal 112, the low-power wireless network node 108a - 108n may commence communication with the access point 102, the low-power wireless network hub 104, or other devices through the primary connection radio.

The low-power wakeup signal 112 comprises any radio transmission detectable by the wakeup radio of a low-power wireless network node 108a - 108n in a deep-sleep state. In some embodiments, the low-power wakeup signal 112 comprises a wakeup on-off keying signal. A wakeup on-off keying signal may represent digital data through the presence or absence of a carrier wave. For example, a low-power wireless network hub 104 may be configured to generate a wakeup on-off keying signal by turning on and turning off the power amplifier associated with the low-power wireless network hub 104 in accordance with a wakeup on-off keying signal protocol. In some embodiments, the wakeup on-off keying signal may be transmitted in accordance with the 802.11ba Wi-Fi wireless communication protocol.

In some embodiments, the low-power wireless network node 108a - 108n may be configured to generate low-power wakeup signals 112. In such an embodiment, a wireless network node 108a - 108n may comprise dynamically changing roles, for example, a hub role and a node role. In an instance in which a low-power wireless network node 108a - 108n assumes a hub role, the low-power wireless network node in the hub role is associated with a set of low-power wireless network node 108a - 108n. While in the hub role, the low-power wireless network node in the hub role receives beacon frames 116 transmitted according to a wireless network protocol from the access point 102, determines the destination of pending primary communication frames 114, and transmit a low-power wakeup signal 112 in an instance in which the destination corresponds to a low-power wireless network node 108a - 108n associated with the low-power wireless network node in the hub role.

Similarly, a low-power wireless network hub 104 may assume a node role. In an instance in which a low-power wireless network hub 104 assumes a node role, the low-power wireless network hub in the node role is associated with a low-power wireless network hub 104. In such an instance, the low-power wireless network hub in the node role enters a deep-sleep state until a low-power wakeup signal 112 is received from the low-power wireless network hub 104. In this way, the low-power wireless network hubs 104 and the low-power wireless network nodes 108a - 108n in a low power wireless network system 100 are dynamically interchangeable during operation.

As further depicted in FIG. 1, the low-power wireless network system 100 includes a standard wireless network node 106. A standard wireless network node 106 communicates with an access point 102 in accordance with the wireless communication protocol. For example, a standard wireless network node 106 may be configured to detect beacon frames 116 and transmit and receive primary communication frames 114 across a wireless connection with the access point 102. Thus, the low-power wireless network system 100 and associated access point 102 operate seamlessly with both standard wireless network nodes 106 and low-power wireless network hubs 104 and low-power wireless network nodes 108a - 108n configured to conserve power in accordance with the principals described herein.

Referring now to FIG. 2, an example low-power wireless network hub 104 is provided. As depicted in FIG. 2, the example low-power wireless network hub 104 includes a controller 202 electrically connected to a wakeup signal generator 204, a primary connection radio 206, and a wakeup radio receiver 208. As further depicted in FIG. 2, the wakeup signal generator 204 is electrically connected to the primary connection radio 206 and configured to modulate the primary connection radio to generate low-power wakeup signals 112.

As depicted in FIG. 2, the example low-power wireless network hub 104 includes a controller 202. The controller 202 is configured to perform various operations in support of the transmission and reception of low-power wakeup signals 112, primary communication frames 114, and reception of beacon frames 116.

The controller 202 may determine the destinations of pending primary communication frames 114 stored at the access point 102. For example, the controller 202 may receive a data map associated with a beacon frame 116 indicating the destinations of pending primary communication frames 114 at the access point 102. In some embodiments, the controller 202 may access destinations of pending primary communication frames 114 through a data structure, such as a TIM in a Wi-Fi wireless communication protocol.

The controller 202 may further initiate the transmission of a low-power wakeup signal 112 through a wakeup signal generator 204. For example, the controller 202 may identify one or more associated low-power wireless network nodes as destinations for which pending primary communication frames 114 are buffered at the access point 102. The controller 202 may then indicate to the wakeup signal generator 204 one or more low-power wireless network nodes to which low-power wakeup signals 112 may be transmitted.

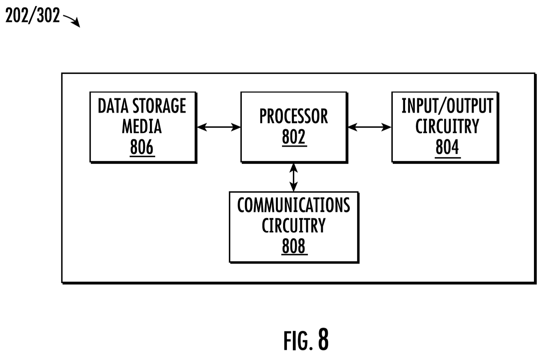

The controller 202 may further be configured to transmit and receive primary communication frames 114 with various wireless network devices (e.g., access point 102, wireless network node 106, low-power wireless network hubs 104, low-power wireless network nodes 108a - 108n). For example, the controller 202 may initiate communication with an associated low-power wireless network node to notify the low-power wireless network node of information related to a pending primary communication frame 114 at the access point 102. The controller 202 may be further configured to detect an acknowledgement frame from an associated low-power wireless network node. In another example, the controller 202 may be configured to receive and initiate primary communication frames 114 to and from the low-power wireless network hub 104 and perform any operations in response to the primary communication frames 114 intended for the low-power wireless network hub 104. A block diagram of an example controller 202 is provided in relation to FIG. 8.

As further depicted in FIG. 2, the example low-power wireless network hub 104 includes a wakeup signal generator 204. A wakeup signal generator 204 comprises any circuitry including hardware and/or software configured to generate a low-power wakeup signal 112. As depicted in FIG. 2, the wakeup signal generator 204 may utilize a primary connection radio 206 to generate on-off keying signals. For example, the wakeup signal generator 204 may alternatively power on and power off a power amplifier of a primary connection radio 206 in order to generate a binary signal. Another example could be within an OFDM modulator, to load either QAM symbols or zeros and perform IFFT. In some embodiments, the wakeup signal generator 204 may generate the low-power wakeup signal 112 in accordance with a wakeup radio protocol, for example the IEEE 802.11ba wireless communication protocol.

As further depicted in FIG. 2, the example low-power wireless network hub 104 includes a primary connection radio 206. A primary connection radio 206 comprises any radio configured to transmit and receive primary communication frames 114 and beacon frames 116 according to a wireless communication protocol. In order to support transmission of data in accordance with a wireless communication protocol, such as Wi-Fi, a primary connection radio 206 may be required to meet certain specifications, such as data rate requirements, signal strength requirements, signal-to-noise ratio requirements, channel width requirements, security requirements, frequency requirements, modulation requirements, and so on. For example, a primary connection radio 206 may be configured to operate at or near 2.4GHz and support orthogonal frequency-division multiplexing (OFDM) transmission.

All of these requirements may cause a primary connection radio 206 to consume significant power during operation. In addition, a primary connection radio 206 may be required to be periodically enabled to receive beacon signals, such as beacon frames 116. As such, even while in an idle connected mode, the primary connection radio 206 may consume significant power.

As further depicted in FIG. 2, the low-power wireless network hub 104 includes a wakeup radio receiver 208. The wakeup radio receiver 208 comprises circuitry including hardware and/or software configured to detect a low-power wakeup signal 112. The wakeup radio receiver 208 is configured to activate the primary connection radio 206 and/or other portions of the low-power wireless network hub 104 in an instance in which a low-power wakeup signal 112 is detected at the wakeup radio receiver 208. Since the wakeup radio receiver 208 accompanies a primary connection radio 206 and is only required to detect low-power wakeup signals 112 and activate the idle portions of the low-power wireless network hub 104, the wakeup radio receiver 208 may not be required to support much of the power consuming functionality of the primary connection radio 206.

Various characteristics of the wakeup radio receiver 208 may enable the wakeup radio receiver 208 to operate at low power. For example, the wakeup radio receiver 208 may be configured to operate at low data rates, for example a few tens of Kbit/s. In addition, in some embodiments, the wakeup radio receiver 208 may only be configured to support uncoherent demodulation, such as wakeup on-off keying signal transmissions. Further, the wakeup radio receiver 208 may require less accuracy of the oscillator, less bandwidth, and/or less digital signal processing. Such reduced requirements may enable the wakeup radio receiver 208 to operate at very low power.

In some embodiments, a low-power wireless network hub 104 may enter into a deep-sleep state. For example, during operation the low-power wireless network hub 104 may be configured to assume a role as a low-power wireless network node 108 (e.g., node role). In such an embodiment, the low-power wireless network hub 104 may enter a deep-sleep state and receive a low-power wakeup signal 112 from another wireless network device, such as another low-power wireless network hub 104. Such functionality may enable a low-power wireless network hub 104 to enter a deep-sleep state during operation, perhaps depending on network traffic, connected devices, and other factors. Thus, a low-power wireless network hub 104 may be configured to receive a low-power wakeup signal 112 in instances in which the low-power wireless network hub 104 is acting in a node role. Further, in some embodiments, the low-power wireless network hub 104 may be determined ad-hoc.

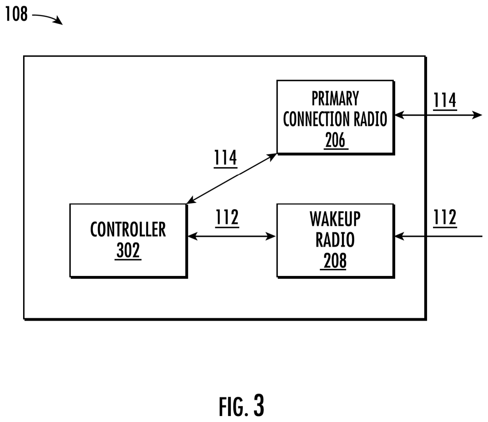

Referring now to FIG. 3, an example low-power wireless network node 108 is depicted. As depicted in FIG. 3, the example low-power wireless network node 108 includes a controller 302 electrically connected to a primary connection radio 206 and a wakeup radio receiver 208. In some embodiments, a low-power wireless network node 108 may comprise an identical architecture to the low-power wireless network hub 104, for example, as depicted in FIG. 2. In such an embodiment, the role of the low-power wireless network node 108 and the low-power wireless network hub 104 may be dynamically interchanged.

As depicted in FIG. 3, the example low-power wireless network node 108 includes a controller 302. The controller 302 is configured to perform various operations in support of the reception of low-power wakeup signals 112, and transmission and reception of primary communication frames 114.

The controller 302 may detect a low-power wakeup signal 112 received at the wakeup radio receiver 208 and activate various portions of the low-power wireless network node 108. For example, the controller 302 may awake the primary connection radio 206 upon reception of a low-power wakeup signal 112. The controller 302 may further be configured to transmit and receive primary communication frames 114 with various wireless network devices (e.g., access point 102, wireless network node 106, low-power wireless network hubs 104, low-power wireless network nodes 108a - 108n) upon reception of a low-power wakeup signal 112. For example, the controller 302 may transmit a request frame requesting one or more pending primary communication frames 114 buffered at the access point. Common request frames may include ps-poll frames in which one frame is retrieved before returning to a deep-sleep state, and/or null-data frames with the bit PS=0, indicating the low power wireless network node 108 is exiting the power save mode to receive the whole queue of buffered frames.

The controller 302 may further be configured to transmit one or more primary communication frames to acknowledge to the low-power wireless network hub transmitting the low-power wakeup signal 112. In addition, the controller 302 may be configured to transmit a request complete signal to a requesting device upon completion of one or more operations associated with the received primary communication frame 114 from the access point.

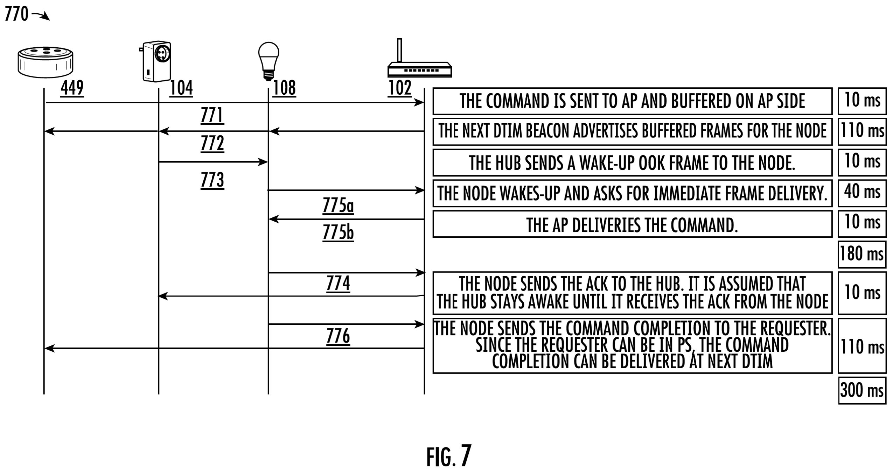

The controller 302 may be further configured to transmit and receive primary communication frames 114 via the primary connection radio 206 in support of standard operations within the low-power wireless network system. A block diagram of an example controller 302 is provided in relation to FIG. 7.

As further depicted in FIG. 3, the example low-power wireless network node 108 includes a primary connection radio 206. A primary connection radio 206 comprises any radio configured to transmit and receive primary communication frames 114 according to a wireless communication protocol. In order to support transmission of data in accordance with a wireless communication protocol, such as Wi-Fi, a primary connection radio 206 may be required to meet certain specifications, such as data rate requirements, signal strength requirements, signal-to-noise ratio requirements, channel width requirements, security requirements, frequency requirements, modulation requirements, and so on. For example, a primary connection radio 206 may be configured to operate at or near 2.4GHz and support orthogonal frequency-division multiplexing (OFDM) transmission.

All of these requirements may cause a primary connection radio 206 to consume significant power during operation. In addition, during standard operation, a primary connection radio 206 may be required to periodically wake up to receive beacon signals. As such, even while in a standard idle connected mode, the primary connection radio 206 may consume significant power.

As further depicted in FIG. 3, the low-power wireless network node 108 includes a wakeup radio receiver 208. The wakeup radio receiver 208 comprises circuitry including hardware and/or software configured to detect a low-power wakeup signal 112. The wakeup radio receiver 208 is configured to activate the primary connection radio 206 and/or other portions of the low-power wireless network node 108 in an instance in which a low-power wakeup signal 112 is detected at the wakeup radio receiver 208. Since the wakeup radio receiver 208 accompanies a primary connection radio 206 may be configured to consume less power while waiting for low-power wakeup signals 112. Some requirements of the wakeup radio receiver 208 may include sensitivity, maximum input level, adjacent channel rejection, nonadjacent channel rejection, etc. Once a low-power wakeup signal 112 is received, the wakeup radio receiver 208 activates the idle portions of the low-power wireless network node 108 to perform communication operations. As such, the wakeup radio receiver 208 may not be required to support much of the power consuming functionality of the primary connection radio 206.

For example, various characteristics of the wakeup radio receiver 208 may enable the wakeup radio receiver 208 to operate at low power. The wakeup radio receiver 208 may be configured to operate at low data rates, for example a few tens of Kbit/s. In addition, in some embodiments, the wakeup radio receiver 208 may only be configured to support uncoherent demodulation, such as wakeup on-off keying signal transmissions. Further, the wakeup radio receiver 208 may require less accuracy of the oscillator, less bandwidth, and/or less digital signal processing. Such reduced requirements may enable the wakeup radio receiver 208 to operate at very low power.

In some embodiments, the low-power wireless network node 108 may include all hardware and/or software necessary to assume a hub role (e.g., a wake-up signal generator). In such an instance, a low-power wireless network node 108 may dynamically assume a hub role and be associated with a set of low-power wireless network nodes.

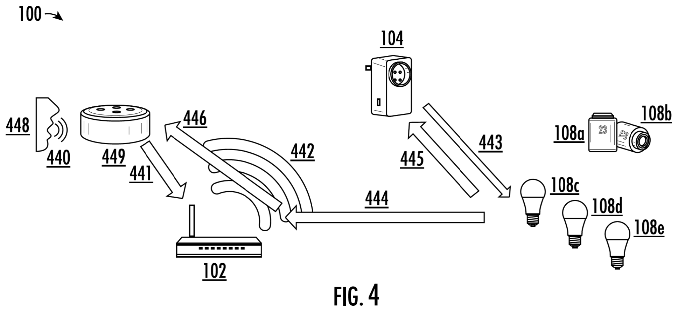

Referring now to FIG. 4, an example data frame transmission sequence (e.g., steps 440 - 446) in an example low-power wireless network system 100 is provided. As depicted in FIG. 4, at step 440, an example user 448 issues a command to a requesting device 449. A command may be any message including a command or status message intended for a destination wireless network node (e.g., low-power wireless network hub 104, low-power wireless network node 108a - 108e). A command may be initiated by a user (e.g., user 448), another device, a timer/alarm, or other similar mechanism. For example, a user may request to change the color of a lightbulb, request the status of an appliance, switch the state of a smart plug, and so on.

At step 441, the requesting device 449 transmits a data frame (e.g., primary communication frame 114) to an access point 102 based on the command. The requesting device 449 may be incorporated into the local area network with the access point 102. In some embodiments, the requesting device 449 may transmit a data frame by way of an external network. A data frame may indicate the destination wireless network node, for example, by a unique identifier. The access point 102 may buffer the data frame until a frame request from the destination wireless network node is received.

At step 442, the access point 102 transmits a beacon frame (e.g., beacon frame 116). The beacon frame 116 may be transmitted periodically in coordination with the wireless network nodes in standard operation. The beacon frame 116 may further include a data structure or map indicating one or more wireless network nodes for which the access point 102 has buffered pending data frames.

As described herein, the low-power wireless network hub 104 may be associated with one or more low-power wireless network nodes 108a - 108e. The one or more low-power wireless network nodes 108a - 108e are configured to remain in a deep-sleep state until a low-power wakeup signal (e.g., low-power wakeup signal 112) is detected. The low-power wireless network hub 104 is configured to detect beacon frames 116 transmitted by the access point 102 as in standard operation. However, the low-power wireless network hub 104 is further configured to determine whether any of the low-power wireless network nodes 108a - 108e associated with the low-power wireless network hub 104 are identified in the beacon frame 116 as having pending data frames at the access point 102.

At step 443, in an instance in which a low-power wireless network node 108a - 108e associated with the low-power wireless network hub 104 is identified in the beacon frame 116, the low-power wireless network hub 104 transmits a low-power wakeup signal to the identified low-power wireless network node (e.g., low-power wireless network node 108c). The low-power wakeup signal is received by the wakeup radio of the low-power wireless network node 108c. Upon receiving the low-power wakeup signal, the low-power wireless network node 108c activates from a deep-sleep state, including activating the primary connection radio.

At step 444, the low-power wireless network node 108c transmits a frame request signal by the primary connection radio to the access point 102, requesting the pending one or more data frames buffered by the access point 102. In response, the pending one or more data frames are returned to the low-power wireless network node 108c.

At step 445, the low-power wireless network node 108c may transmit, by the primary connection radio, an acknowledgement signal to the low-power wireless network hub 104 indicating the low-power wakeup signal was received.

At step 446, a request complete frame is transmitted to the requesting device 449. In some embodiments, a request complete frame may include requested status queried by the requesting device 449. For example, a smart thermometer may report the current temperature. In some embodiments, the request complete frame may indicate a state at the completion of the operation associated with the data frame. For example, a smart light bulb may turn off and report in the request complete frame that the current state of the smart light bulb is off.

Once the request complete frame is sent, the low-power wireless network node 108c may turn off the primary connection radio and enter into an idle state or deep-sleep state until awoken by the low-power wireless network hub 104. Utilizing the low-power wireless network hub 104 to process the beacon frames on behalf of the low-power wireless network nodes 108a - 108e and awake the low-power wireless network nodes 108a - 108e only when a data frame is available, enables significant power savings at the low-power wireless network nodes 108a - 108e.

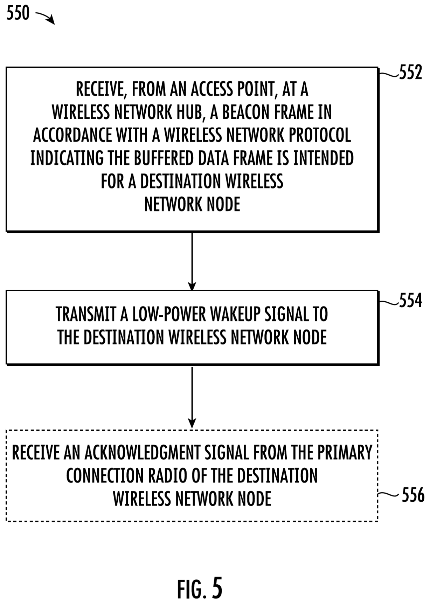

Referring now to FIG. 5, an example method 550 for transmitting a buffered data frame (e.g., primary communication frame 114) on a low-power wireless network system (e.g., low-power wireless network system 100) is provided. At block 552, a low-power wireless network hub (e.g., low-power wireless network hub 104) receives, from an access point (e.g., access point 102), a beacon frame (e.g., beacon frame 116) in accordance with a wireless network protocol indicating the buffered data frame is intended for a destination wireless network node (e.g., low-power wireless network node 108a - 108e). As described herein, one or more low-power wireless network nodes may be associated with a low-power wireless network hub. The low-power wireless network hub is configured to receive the beacon signals periodically transmitted by the access point to determine if there are any buffered data frames intended for any of the low-power wireless network nodes associated with the low-power wireless network hub pending at the access point.

At block 554, the low-power wireless network hub transmits a low-power wakeup signal (e.g., low-power wakeup signal 112) to the destination wireless network node. As described herein, the low-power wireless network hub may be configured to generate a low-power wakeup signal, for example, a wakeup on-off keying signal. The low-power wakeup signal may be generated by a standard primary connection radio on the low-power wireless network hub. In addition, the low-power wakeup signal may be detected by a low-power wakeup radio on the destination wireless network node. The low-power wakeup signal causes the low-power wireless network node to exit a deep-sleep state in which the primary connection radio is turned off and enter an awake state.

At block 556, the low-power wireless network hub receives an acknowledgement signal from the primary connection radio of the destination low-power wireless network node. In some embodiments, the low-power wireless network hub may await the return of an acknowledgement signal from the primary connection radio indicating the low-power wakeup signal was received.

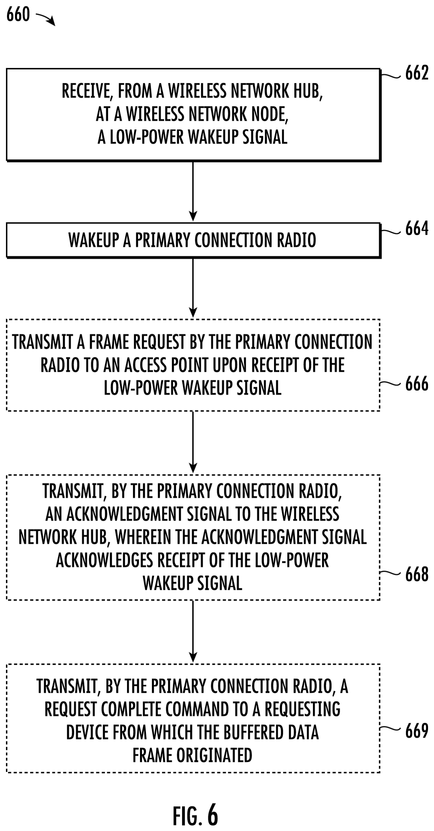

Referring now to FIG. 6, an example method 660 for receiving a buffered data frame (e.g., primary communication frame 114) on a low-power wireless network system (e.g., low-power wireless network system 100) is provided. At block 662, a low-power wireless network node (e.g., low-power wireless network node 108) receives from a low-power wireless network hub (e.g., low-power wireless network hub 104) a low-power wakeup signal (e.g., low-power wakeup signal 112). As described herein, the low-power wireless network node may be in a deep-sleep state with the primary connection radio (e.g., primary connection radio 206) and other portions of the low-power wireless network node disabled when not receiving and/or servicing a data frame. The low-power wakeup signal may be transmitted upon detection at the low-power wireless network hub associated with the low-power wireless network node of a pending buffered data frame intended for the low-power wireless network node at an access point.

At block 664, the low-power wireless network node wakes up the primary connection radio. The primary connection radio enables transmission and receipt of primary communication frames, including the buffered data frame, in accordance with a wireless network protocol.

At block 666, the low-power wireless network node transmits a frame request by the primary connection radio to an access point upon receipt of the low-power wakeup signal. The frame request indicates to the access point the low-power wireless network node is prepared to receive the frame data. By immediately transmitting a frame request upon receipt of the low-power wakeup signal, the latency associated with a response by the low-power wireless network node and hence the command execution time may be minimized.

At block 668, the low-power wireless network node transmits, by the primary connection radio, an acknowledgement signal to the low-power wireless network hub, wherein the acknowledgement signal acknowledges receipt of the low-power wakeup signal.

At block 669, the low-power wireless network node transmits, by the primary connection radio, a request complete command to a requesting device from which the buffered data frame originated. The request complete command may further provide updated state, requested status, or other pertinent information to any operation performed in response to the transmitted frame data.

Referring now to FIG. 7, a signal diagram 770 depicting the transmission of a buffered data frame (e.g., primary communication frame 114) on a low-power wireless network system (e.g., low-power wireless network system 100) is provided.

At step 771, a data frame is transmitted to an access point 102 based on a message received at a requesting device 449 and buffered by the access point 102. The buffered data frame indicates one or more destinations to which the buffered data frame is sent, including low-power wireless network node 108. The buffered data frame is buffered at the access point 102 and the one or more destinations are indicated in a beacon frame (e.g., beacon frame 116) to be transmitted by the access point 102.

At step 772, a beacon frame is broadcast to all wireless network nodes within range of the access point 102. The beacon frame includes the destinations for which buffered data frames are pending. The beacon frame is received by the low-power wireless network hub 104.

Upon identification of the low-power wireless network node 108 as a destination for a pending buffered data frame at the wireless access point 102, at step 773, the low-power wireless network hub 104 transmits a low-power wakeup signal (e.g., low-power wakeup signal 112) to the low-power wireless network node 108.

Upon receipt of the low-power wakeup signal, the low-power wireless network node 108 enables a primary connection radio, and at step 775a transmits a frame request to the access point 102, requesting delivery of the pending buffered data frame. At step 775b, the access point 102 delivers the buffered data frame to the low-power wireless network node 108.

The low-power wireless network node 108 executes the command indicated by the buffered data frame.

At step 774, the low-power wireless network node 108 transmits an acknowledgement signal to the low-power wireless network hub 104. As depicted in FIG. 6, the acknowledgement signal is transmitted by way of the access point 102. As depicted in FIG. 6, by immediately requesting the buffered data frame and executing the command, the low-power wireless network node 108 may reduce latency in response.

At step 776, the low-power wireless network node 108 transmits a request complete signal to the requesting device 449. The request complete signal may indicate any updated status or state based on the buffered data frame.

Referring now to FIG. 8, FIG. 8 illustrates an example controller 202/302 in accordance with at least some example embodiments of the present disclosure. The controller 202/302 includes processor 802, input/output circuitry 804, data storage media 806, and communications circuitry 808. In some embodiments, the controller 202/302 is configured, using one or more of the sets of circuitry 802, 804, 806, and/or 808, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively, or additionally, in some embodiments, other elements of the controller 202/302 provide or supplement the functionality of other particular sets of circuitry. For example, the processor 802 in some embodiments provides processing functionality to any of the sets of circuitry, the data storage media 806 provides storage functionality to any of the sets of circuitry, the communications circuitry 808 provides network interface functionality to any of the sets of circuitry, and/or the like.

In some embodiments, the processor 802 (and/or co-processor or any other processing circuitry assisting or otherwise associated with the processor) is/are in communication with the data storage media 806 via a bus for passing information among components of the controller 202/302. In some embodiments, for example, the data storage media 806 is non-transitory and may include, for example, one or more volatile and/or non-volatile memories. In other words, for example, the data storage media 806 in some embodiments includes or embodies an electronic storage device (e.g., a computer readable storage medium). In some embodiments, the data storage media 806 is configured to store information, data, content, applications, instructions, or the like, for enabling the controller 202/302 to carry out various functions in accordance with example embodiments of the present disclosure.

The processor 802 may be embodied in a number of different ways. For example, in some example embodiments, the processor 802 includes one or more processing devices configured to perform independently. Additionally, or alternatively, in some embodiments, the processor 802 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the controller 202/302, and/or one or more remote or "cloud" processor(s) external to the controller 202/302.

In an example embodiment, the processor 802 is configured to execute instructions stored in the data storage media 806 or otherwise accessible to the processor. Alternatively, or additionally, the processor 802 in some embodiments is configured to execute hard-coded functionality. As such, whether configured by hardware or software methods, or by a combination thereof, the processor 802 represents an entity (e.g., physically embodied in circuitry) capable of performing operations according to an embodiment of the present disclosure while configured accordingly. Alternatively, or additionally, as another example in some example embodiments, when the processor 802 is embodied as an executor of software instructions, the instructions specifically configure the processor 802 to perform the algorithms embodied in the specific operations described herein when such instructions are executed.

In some embodiments, the controller 202/302 includes input/output circuitry 804 that provides output to the user and, in some embodiments, to receive an indication of a user input. In some embodiments, the input/output circuitry 804 is in communication with the processor 802 to provide such functionality. The input/output circuitry 804 may comprise one or more user interface(s) (e.g., user interface) and in some embodiments includes a display that comprises the interface(s) rendered as a web user interface, an application user interface, a user device, a backend system, or the like. The processor 802 and/or input/output circuitry 804 comprising the processor may be configured to control one or more functions of one or more user interface elements through computer program instructions (e.g., software and/or firmware) stored on a memory accessible to the processor (e.g., data storage media 806, and/or the like). In some embodiments, the input/output circuitry 804 includes or utilizes a user-facing application to provide input/output functionality to a client device and/or other display associated with a user.

In some embodiments, the controller 202/302 includes communications circuitry 808. The communications circuitry 808 includes any means such as a device or circuitry embodied in either hardware or a combination of hardware and software that is configured to receive and/or transmit data from/to a network and/or any other device, circuitry, or module in communication with the controller 202/302. In this regard, the communications circuitry 808 includes, for example in some embodiments, a network interface for enabling communications with a wired or wireless communications network. Additionally, or alternatively in some embodiments, the communications circuitry 808 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 808 includes circuitry for interacting with the antenna(s) and/or other hardware or software to cause transmission of signals via the antenna(s) or to handle receipt of signals received via the antenna(s). In some embodiments, the communications circuitry 808 enables transmission to and/or receipt of data from a client device in communication with the controller 202/302.

Additionally, or alternatively, in some embodiments, one or more of the sets of circuitry 802-914 are combinable. Additionally, or alternatively, in some embodiments, one or more of the sets of circuitry perform some or all of the functionality described associated with another component. For example, in some embodiments, one or more sets of circuitry 802-808 are combined into a single module embodied in hardware, software, firmware, and/or a combination thereof. Similarly, in some embodiments, one or more of the sets of circuitry is/are combined such that the processor 802 performs one or more of the operations described above with respect to each of these circuitry individually.

While this detailed description has set forth some embodiments of the present invention, the appended claims cover other embodiments of the present invention which differ from the described embodiments according to various modifications and improvements. For example, one skilled in the art may recognize that such principles may be applied to any wireless network system comprising one or more nodes which may benefit from reducing overall power consumption. For example, any internet of things wireless network devices, such as smart lights, security cameras, doorbells, thermostats, smart speakers, smart appliances, and so on.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A wireless network system, comprising:
an access point configured to establish communication with an external network, and transmit data frames to a plurality of wireless network nodes according to a wireless network protocol;
the plurality of wireless network nodes comprising at least:
a destination wireless network node, comprising at least:
a primary connection radio configured to generate communication signals according to the wireless network protocol; and
a wakeup radio receiver configured to receive a low-power wakeup signal; and
a wireless network hub configured to transmit the low-power wakeup signal to the destination wireless network node in an instance in which a beacon frame from the access point indicates a buffered data frame is intended for the destination wireless network node.

2. The wireless network system of claim 1, wherein the wireless network hub is associated with a second wireless network hub, and wherein the wireless network hub enters a deep-sleep state until a second low-power wakeup signal is received from the second wireless network hub.

3. The wireless network system of claim 1 or 2, wherein at least one of the wireless network nodes of the plurality of wireless network nodes is configured to dynamically assume a role as the wireless network hub.

4. A wireless network node, comprising:
a primary connection radio configured to generate communication signals according to a wireless network protocol; and
a wakeup radio receiver configured to receive a low-power wakeup signal from a wireless network hub in an instance in which a beacon frame from an access point, configured to establish communication with an external network and transmit data frames to a plurality of wireless network nodes according to the wireless network protocol, indicates a buffered data frame is intended for the wireless network node.

5. The wireless network system of any of claims 1 to 3, or the wireless network node of claim 4, wherein the wireless network node further comprises a controller configured to:
recognize the low-power wakeup signal; and
wakeup the primary connection radio.

6. The wireless network system of any of claims 1 to 3 or 5, or the wireless network node of claim 4 or 5, the controller further configured to:
transmit a frame request by the primary connection radio to the access point upon receipt of the low-power wakeup signal.

7. The wireless network system of any of claims 1 to 3, 5 or 6, or the wireless network node of any of claims 4 to 6, the controller further configured to:
transmit, by the primary connection radio, an acknowledgement signal to the wireless network hub, wherein the acknowledgement signal acknowledges receipt of the low-power wakeup signal.

8. The wireless network system of any of claims 1 to 3 or 5 to 7, or the wireless network node of any of claims 4 to 7, the controller further configured to:
transmit, by the primary connection radio, a request complete command to a requesting device from which the buffered data frame originated.

9. The wireless network system of any of claims 1 to 3 or 5 to 8, or the wireless network node of any of claims 4 to 8, wherein the wireless network node remains in a deep-sleep state until the low-power wakeup signal is received.

10. The wireless network system of any of claims 1 to 3 or 5 to 9, or the wireless network node of any of claims 4 to 9, wherein the low-power wakeup signal is a wakeup on-off keying signal.

11. The wireless network system of any of claims 1 to 3 or 5 to 10, or the wireless network node of any of claims 4 to 10, wherein the wireless network hub is configured to transmit the wakeup on-off keying signal in accordance with an 802.11ba Wi-Fi protocol.

12. A wireless network hub associated with one or more wireless network nodes, comprising:
a primary connection radio configured to:
receive a beacon frame from an access point according to a wireless network protocol indicating a destination wireless network node within the one or more wireless network nodes,
wherein the access point is configured to establish communication with an external network; and
transmit a low-power wake-up signal to the destination wireless network node in an instance in which the beacon frame from the access point indicates a buffered data frame is intended for the destination wireless network node.

13. The wireless network hub of claim 12, further comprising:
a wakeup radio receiver configured to receive a second low-power wakeup signal from a second wireless network hub, in an instance in which a second beacon frame from the access point, indicates a second buffered data frame is intended for the wireless network hub, and the wireless network hub is in a deep-sleep state.
